# EUROPÄISCHE PATENTSCHRIFT

(11) **EP 1 141 533 B1**
(45) Veröffentlichungstag und Bekanntmachung des Hinweises auf die Patenterteilung: **16.10.2002**
(21) Anmeldenummer: 99963484.3
(22) Anmeldetag: 10.12.1999
(51) Int. Cl.: F02D 41/14, F02D 21/08, F01N 3/08

(54) **BETRIEB EINES VERBRENNUNGSMOTORS IN VERBINDUNG MIT EINEM NOX-SPEICHER-KATALYSATOR**
OPERATION OF AN INTERNAL COMBUSTION ENGINE IN CONJUNCTION WITH A NOx-STORAGE CATALYST
FONCTIONNEMENT D'UN MOTEUR THERMIQUE COUPLE A UN CATALYSEUR A ACCUMULATION DE NOX

(30) Priorität: 21.12.1998 DE 19858990
(43) Veröffentlichungstag der Anmeldung: 10.10.2001
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Meyer, Enno, Dr.
(86) Internationale Anmeldenummer: EP9909776
(87) Internationale Veröffentlichungsnummer: WO00037787

(56) Entgegenhaltungen:
- US-A- 4 192 140
- US-A- 4 729 220
- US-A- 5 201 173
- PATENT ABSTRACTS OF JAPAN vol. 015, no. 235 (M-1125), 17. Juni 1991 (1991-06-17) & JP 03 074560 A (MAZDA MOTOR CORP), 29. März 1991 (1991-03-29)
- PATENT ABSTRACTS OF JAPAN vol. 1996, no. 01, 31. Januar 1996 (1996-01-31) & JP 07 247916 A (NISSAN MOTOR CO LTD), 26. September 1995 (1995-09-26)

## Beschreibung

Die Erfindung betrifft einen NOx-Speicher-Katalysator und insbesondere ein Verfahren zur Beeinflussung der Katalysatortemperatur des NOx-Speicher-Katalysators.

Drei-Wege-, Oxidations- und NOx-Speicher-Katalysatoren haben einen typspezifischen optimalen Betriebsbereich hinsichtlich der Temperatur und der Raumgeschwindigkeit mit maximalen HC-, CO- und NOx-Umsätzen bis nahezu 100 %. Werden diese Grenzen der Temperatur bzw. der Raumgeschwindigkeit unter- bzw. überschritten, können die Umsatzraten obiger Reaktionen verringert werden, wobei die Umsatzraten sogar zum Teil drastisch bis auf 0 % einbrechen. Insbesondere wird bei NOx-Speicherkatalysatoren bei einem Überschreiten der Thermo-Desorptionstemperatur sogar durch den Ausstoß bereits eingelagerter Stickoxide eine Umsatzrate von < 0 % beobachtet, mit anderen Worten, der NOx-Speicher-Katalysator liefert am Ausgang durch die Desorption von bereits eingelagerten Stickoxiden mehr NOx als der Abgasstrom des mager laufenden Motors beinhaltet.

Insbesondere bei NOx-Speicher-Katalysatoren schlägt bei Temperaturen oberhalb ca. 550 °C bei Magerbetrieb die NOx-Einlagerung in eine NOx-Desorption um, so daß bei zu heißem Katalysator der Magerbetrieb des Motors auch dann unterdrückt werden muß, wenn von den motorischen Randbedingungen her dieser Betriebsmodus möglich ist. Als typische Betriebssituation ist beispielsweise eine Fahrt mit niedriger Geschwindigkeit, beispielsweise auf einer Landstraße, nach längerer Hochlastfahrt, beispielsweise Autobahn, zu erwähnen. Erst nach der Auskühlung des NOx-Speicher-Katalysators unter die Thermo-Desorptionsschwelle darf auf Magerbetrieb umgeschaltet werden.

EP-A-0 867 604 beschreibt ein Verfahren und eine Vorrichtung zum Betrieb eines NOx-Speicherkatalysators einer magerlauffähigen Brennkraftmaschine, wobei der Magerbetrieb unterdrückt wird, wenn die Katalysatortemperatur größer als die Temperatur der Thermo-Desorption des NOx-Speicherkatalysators ist

Der Erfindung liegt die Aufgabe zugrunde, den Katalysator über einen möglichst ausgedehnten Zeitraum im optimalen Raumgeschwindigkeits- und Temperaturbereich zu halten.

Die Aufgabe wird durch das Verfahren mit den Merkmalen der Ansprüche 1 und 3 gelöst. Bevorzugte Ausgestaltungen der Erfindung sind Gegenstand der Unteransprüche.

Bevorzugte Ausführungsformen der Erfindung werden nachfolgend anhand der Zeichnungen erläutert.
Fig. 1 zeigt eine schematische Verfahrensdarstellung zur Regelung der Katalysatortemperatur in einer Schwachlastphase; und
Fig. 2 zeigt die schematische Darstellung des erfindungsgemäßen Verfahrens für eine Schubphase.

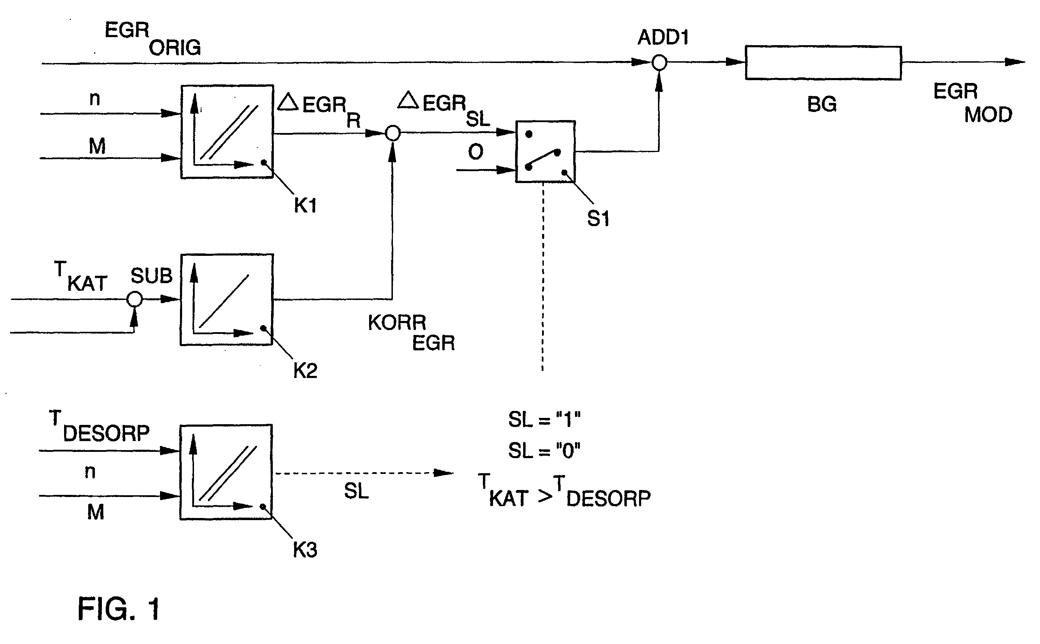

Fig. 1 zeigt das erfindungsgemäße Verfahren in einer Schwachlastphase. Dies ist beispielsweise der Fall, wenn die Katalysatortemperatur nach einer Belastungsfahrt, also beispielsweise einer Hochgeschwindigkeitsfahrt auf der Autobahn, über der Thermo-Desorptionstemperatur liegt und der Motor in einer Schwachlastphase, beispielsweise einer nachfolgenden Fahrt auf einer Landstraße, eigentlich in den Magerbetrieb geschaltet werden sollte. Diese Umschaltung ist aber aufgrund der erhöhten Katalysatortemperatur und der Unfähigkeit des NOx-Speicher-Katalysators zum Speichern der Stickoxide nicht möglich. Um den Wert der Originalabgasrückführung EGR_{ORIG} zu korrigieren, wird aus der Drehzahl n sowie der Einspritzmenge M mittels eines Kennfeldes K1 ein ΔEGR_{R} ermittelt. Aus der Katalysatortemperatur T_{KAT} und der Thermo-Desorptionstemperatur T_{DESORP} wird in einem Subtrahierer SUB die Differenz gebildet, und über ein Kennfeld K2 ein Korrekturfaktor KORR_{EGR} für den Schwachlastbetrieb ermittelt, der in einem Multiplizierer MULT mit der EGR-Erhöhung ΔEGR_{R} multipliziert wird, so daß sich der Schwachlastkorrekturwert ΔEGR_{SL} ergibt. In einem Schalter S1 wird entschieden, ob der Korrekturwert ΔEGR_{SL} zu dem Originalabgasrückführwert EGR_{ORIG} in einem Addierer ADD1 addiert wird. Dadurch ergibt sich der modifizierte erhöhte Abgasrückführwert EGR_{MOD}. Die Begrenzung BG des Abgasrückführwertes wird auf 100 % gesetzt, d.h., es kann das gesamte Abgas rückgeführt werden. Ferner wird der Schalter S1 von einem Schwachlasterkennungssignal SL gesteuert, das über ein Kennfeld K3 aus der Drehzahl n sowie der Einspritzmenge M abgeleitet wird. Im Falle, daß die Schuberkennung SE im Zustand "AUS" ("logisch 0") ist, die Katalysatortemperatur T_{KAT} größer als die Thermo-Desorptionstemperatur T_{DESORP} ist und das Schwachlastsignal SL im Zustand "EIN" ("logisch 1") ist, wird das Korrektursignal ΔEGR_{SL} durch den Schalter S1 durchgeschaltet.

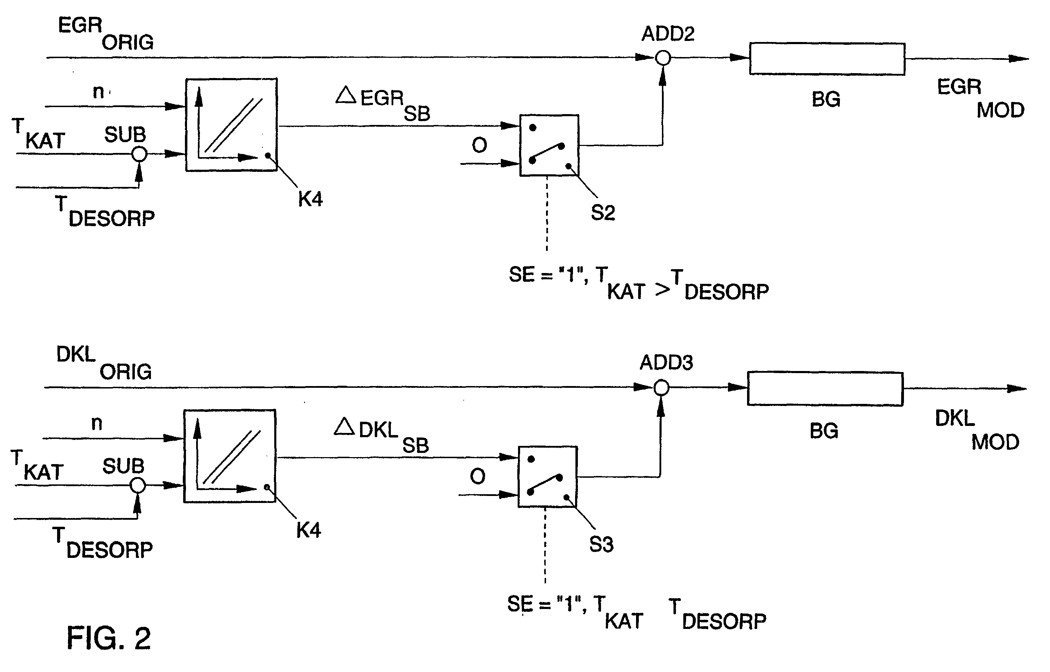

Fig. 2 zeigt die schematische Darstellung des Verfahrens zum Absenken der Katalysatortemperatur im Fall eines Schubbetriebs. Aus der Drehzahl n sowie der Differenz aus der Katalysatortemperatur T_{KAT} und der Thermo-Desorptionstemperatur T_{DESORP} wird mittels eines Kennfeldes K4 eine Abgasrückführgröße ΔEGR_{SCHUB} bestimmt, um die die Abgasrückführung vermindert wird. Durch das Einbeziehen der Differenztemperatur aus Katalysatortemperatur T_{KAT} und Desorptionstemperatur T_{DESORP} wird eine Abhängigkeit der Größe zur Verringerung der Abgasrückführung von dem Überschreiten des NOx-Katalysatorbetriebsbereichs bewirkt. Über einen Schalter S2 wird der Wert ΔEGR_{SCHUB} auf einen Addierer ADD2 gegeben, falls die Schuberkennung SE logisch "EIN" ist und die Bedingung T_{KAT} >T_{DESORP} erfüllt ist. In dem Addierer ADD2 wird der Verringerungswert ΔEGR_{SCHUB} von dem derzeitigen ursprünglichen Abgasrückführwert EGR_{ORIG} subtrahiert. Der modifizierte Abgasrückführwert EGR_{MOD} ist durch einen Begrenzer BG auf 0 % begrenzt, d.h., die Abgasrückführung kann komplett ausgeschaltet werden.

Zur gleichen Zeit wird hinsichtlich der Drosselklappenstellung aus der Drehzahl n des Motors sowie der Differenz aus der Katalysatortemperatur T_{KAT} sowie der Thermo-Desorptionstemperatur T_{DESORP} über ein Kennfeld K5 ein Drosselklappenwert ΔDKL_{SB} bestimmt, um den der eingestellte Drosselklappenwert DKL_{ORIG} erhöht wird. Über einen Schalter S3 wird der Wert ΔDKL_{SCHUB} auf einen Addierer ADD3 gegeben und zum Drosselklappenstellungswert DKL_{ORIG} hinzuaddiert, wodurch sich der modifizierte Drosselklappenwert DKL_{MOD} ergibt. Zum Durchschalten des Schalters S3 müssen die Bedingungen Schuberkennung SE "AN" und T_{KAT} >T_{DESORP} erfüllt sein. Der modifizierte Drosselklappenwert DKL_{MOD} ist über einen Begrenzer BG auf 100 % begrenzt, mit anderen Worten, es ist möglich, die Drosselklappe völlig zu öffnen, falls die Schuberkennung SE den logischen Zustand "AN" hat. Dadurch wird bewirkt, daß bei magerbetriebsfähigen Brennkraftmaschinen im Falle einer Schubphase, in der kein Kraftstoff in einem entsprechenden Brennraum zugeführt wird, eine Spülung des Brennraums und damit des Katalysators sozusagen mit Frischluft bewirkt wird, die wesentlich kühler ist als das Abgas der Abgasrückführung. Dadurch wird im Falle einer Schubphase durch die Abschaltung der Abgasrückführung und die Durchlüftung des Motors sowie des nachfolgenden Katalysators ein schnelleres Abkühlen bewirkt.

### BEZUGSZEICHENLISTE

- ΔDKL_{SB}: Drosselklappenerhöhung in einer Schubphase
- ΔEGR_{R}: Rohwert der Abgasrückführungserhöhung
- ΔEGR_{SB}: Abgasrückführungsverringerung in einer Schubphase
- ΔEGR_{SL}: Abgasrückführungserhöhung bei Schwachlast
- ADD1: Addierer 1
- ADD2: Addierer 2
- ADD3: Addierer 3
- BG: Begrenzer
- BG_{DKL}: Begrenzer Drosselklappe
- DKL_{MOD}: modifizierter Drosselklappenwert
- DKL_{ORIG}: ursprüngliche Drosselklappenstellung
- EGR_{MOD}: modifizierter Abgasrückführwert
- EGR_{ORIG}: ursprünglicher Abgasrückführwert
- K1 - K5: Kennfeld
- KORR_{EGR}: Korrekturfaktor
- M: Einspritzmenge
- MULT: Multiplizierer
- n: Drehzahl
- S1: Schalter
- S2: Schalter
- S3: Schalter
- SE: Schuberkennung
- SL: Schwachlast
- SUB: Subtrahierer
- T_{DESORP}: Thermo-Desorptionstemperatur
- T_{KAT}: Katalysatortemperatur

## Patentansprüche

1. Verfahren zum Betrieb eines NOx-Speicherkatalysators einer magerlauffählgen Brennkraftmaschine, wobei der Magerbetrieb unterdrückt wird und in Schwachlastphasen die Abgasrückführrate angehoben wird, wenn die Katalysatortemperatur T_{KAT} größer als die Temperatur der Thermo-Desorption T_{DESORP} des NOx-Speicherkatalysators ist.

2. Verfahren nach Anspruch 1, **dadurch gekennzeichnet, daß** die Brennkraftmaschine mit λ = 1 betrieben wird.

3. Verfahren zum Betrieb eines NOx-Speicher-Katalysators einer magerlauffähigen Brennkraftmaschine, wobei In Schubphasen die Abgasrückführrate abgesenkt und die Drosselklappe geöffnet wird, wenn die Katalysatortemperatur T_{KAT} größer als die Temperatur der Thermo-Desorption T_{DESORP} des NOx-Speicherkatalysators ist.

4. Verfahren nach Anspruch 3, **dadurch gekennzeichnet, daß** die Änderung der Verstellung der Abgasrückführrate und/oder der Drosselklappe gegenüber dem Ausgangszustand temperaturabhängig erfolgt.

5. Verfahren nach Anspruch 4, **dadurch gekennzeichnet, daß** die Verstellung der Abgasrückführrate und/oder Drosselklappe mit sinkender Katalysatortemperatur T_{KAT} zurückgenommen wird.

6. Verfahren nach einem der Ansprüche 3 bis 5 **dadurch gekennzeichnet, daß** die Abgasrückführrate maximal 60 % beträgt.

7. Verfahren nach einem der Ansprüche 3 bis 5, **dadurch gekennzeichnet, daß** die Abgasrückführrate mindestens 25 % beträgt.

8. Verfahren nach einem der Ansprüche 3 bis 5, **dadurch gekennzeichnet, daß** die Abgasrückführrate größer als 35 % ist.

9. Verfahren nach einem der vorangegangenen Ansprüche, **dadurch gekennzeichnet, daß** die magerlauffähige Brennkraftmaschine ein direkteinspritzender Ottomotor ist.

## Claims

1. Method for operating a NOx-storage catalyst of an internal combustion engine capable of being operated in a lean running mode, wherein the lean running operation is suppressed and the rate of recirculated exhaust gas is increased in low load phases, if the catalyst temperature T_{KAT} is greater than the thermo-desorption temperature T_{DESORP} of the NOx-storage catalyst.

2. Method according to claim 1, **characterized in that** the internal combustion engine is operated with λ = 1.

3. Method for operating a NOx-storage catalyst of an internal combustion engine capable of being operated in a lean running mode, wherein the rate of exhaust recirculation is decreased in thrust phases and the throttle valve is opened, if the catalyst temperature T_{KAT} is greater than the thermo-desorption temperature T_{DESORP} of the NOx-storage catalyst.

4. Method according to claim 3, **characterized in that** the change in adjustment of exhaust gas recirculation rate and/or throttle valve is temperature dependant in comparison to the original setting.

5. Method according to claim 4, **characterized in that** the adjustment of exhaust gas recirculation rate and/or throttle valve is reduced with decreasing catalyst temperature T_{KAT}.

6. Method according to anyone of claims 3 to 5, **characterized in that** the rate of exhaust gas recirculation is 60% at maximum.

7. Method according to anyone of claims 3 to 5, **characterized in that** the rate of exhaust gas recirculation is 25% at least.

8. Method according to anyone of claims 3 to 5, **characterized in that** the rate of exhaust gas recirculation is greater than 25%

9. Method according to anyone of the preceding claims, **characterized in that** the lean running internal combustion engine is a spark ignition engine with direct injection.

## Revendications

1. Procédé d'exploitation d'un convertisseur catalytique à accumulation NOx d'un moteur à combustion interne pouvant tourner en régime pauvre, dans lequel le fonctionnement pauvre est réprimé et le taux de recyclage de gaz d'échappement est augmenté dans les phases à charge réduite lorsque la température de convertisseur catalytique T_{KAT} est supérieure à la température de la thermodésorption T_{DESORP} du convertisseur catalytique à accumulation NOx.

2. Procédé selon la revendication 1, **caractérisé en ce que** le moteur à combustion interne fonctionne avec λ = 1.

3. Procédé d'exploitation d'un convertisseur catalytique à accumulation NOx d'un moteur à combustion interne pouvant tourner en régime pauvre, dans lequel le taux de recyclage de gaz d'échappement est diminué dans les phases de poussée et le papillon des gaz est ouvert lorsque la température de convertisseur catalytique T_{KAT} est supérieure à la température de la thermodésorption T_{DESORP} du convertisseur catalytique à accumulation NOx.

4. Procédé selon la revendication 3, **caractérisé en ce que** la variation du réglage du taux de recyclage de gaz d'échappement et/ou du papillon des gaz par rapport à l'état initial s'effectue en fonction de la température.

5. Procédé selon la revendication 4, **caractérisé en ce que** le réglage du taux de recyclage de gaz d'échappement et/ou du papillon des gaz est annulé lorsque la température de convertisseur catalytique T_{KAT} diminue.

6. Procédé selon l'une quelconque des revendications 3 à 5, **caractérisé en ce que** le taux de recyclage de gaz d'échappement est au maximum de 60 %.

7. Procédé selon l'une quelconque des revendications 3 à 5, **caractérisé en ce que** le taux de recyclage de gaz d'échappement est au minimum de 25 %.

8. Procédé selon l'une quelconque des revendications 3 à 5, **caractérisé en ce que** le taux de recyclage de gaz d'échappement est supérieur à 35 %.

9. Procédé selon l'une quelconque des revendications précédentes, **caractérisé en ce que** le moteur à combustion interne pouvant tourner en régime pauvre est un moteur à quatre temps à injection directe.
